# EUROPEAN PATENT APPLICATION

(11) **EP 4 683 007 A1**
(43) Date of publication of application: **21.01.2026**
(21) Application number: 24770851.4
(22) Date of filing: 11.03.2024
(51) Int. Cl.: H01M 4/96, B32B 5/02, D04H 1/4242, D21H 13/50, H01M 8/10

(54) **CARBON FIBER SHEET, GAS DIFFUSION LAYER FOR FUEL CELL, AND MEMBRANE ELECTRODE COMPOSITE**

(30) Priority: 15.03.2023 JP 2023041270
(71) Applicant: Tomoegawa Corporation, Tokyo 104-8335 (JP)
(72) Inventor: HONJYOU, Takuya, Shizuoka-shi, Shizuoka 421-0192 (JP); TAKAHATA, Masanori, Shizuoka-shi, Shizuoka 421-0192 (JP); HATTORI, Akinori, Shizuoka-shi, Shizuoka 421-0192 (JP); UMEHARA, Yoshihiro, Shizuoka-shi, Shizuoka 421-0192 (JP); IKEYA, Hirotoshi, Shizuoka-shi, Shizuoka 421-0192 (JP)
(74) Representative: Hoffmann Eitle
(86) International application number: PCT/JP2024/009372
(87) International publication number: WO 2024/190745

(57) **Abstract**

Provided is a carbon fiber sheet suitable as a constituent member of a gas diffusion layer in a fuel cell and having excellent performance. An aspect of the present disclosure is a carbon fiber sheet containing: carbon fibers; conductive particles; organic fibers; and a binder resin, in which the binder resin contains an olefin-based resin, and a composite containing the conductive particles, the organic fibers, and the binder resin is bonded to a part of a network structure formed by the carbon fibers.

## Description

### Technical Field

The present invention relates to a carbon fiber sheet, a fuel cell gas diffusion layer, and a membrane electrode composite.

### Background Art

Fuel cells have been widely used as power for automobiles and the like. An electrode member including a catalyst layer and a gas diffusion layer in contact with the catalyst layer is commonly used in fuel cells. This gas diffusion layer is a porous layer, which functions as an electrode base material, functions to uniformize a gas reaching the catalyst layer, functions to promote the discharge of excess moisture in the system, and performs similar functions, and it is important to improve the performance of the gas diffusion layer in order to improve the performance of the fuel cell. Therefore, various studies have been conducted to improve the performance of the gas diffusion layer.

Since the gas diffusion layer is required to have conductivity and strength in addition to being porous, a carbon fiber sheet may be used as a member constituting the gas diffusion layer. For example, Patent Literature 1 discloses that a carbon fiber sheet in which carbon fibers are bound by a binder and the amount of dust generated from a conductive material per area of 200 m² is 200,000 or less is applied to a gas diffusion layer.

### Citation List

### Patent Literature

Patent Literature 1: JP 2018-085332 A

### Summary of Invention

### Technical Problem

However, even though such a carbon fiber sheet is used, it has been difficult to obtain sufficient performance as a constituent member of a gas diffusion layer in a fuel cell.

Therefore, an object of the present invention is to provide a carbon fiber sheet suitable as a constituent member of a gas diffusion layer in a fuel cell and having excellent performance.

### Solution to Problem

The present inventors have found that the above-described problems can be solved by forming a carbon fiber sheet having a specific structure, and have completed the present invention. That is, the present invention is as follows.

A first aspect of the present invention is a carbon fiber sheet containing:
carbon fibers; conductive particles; organic fibers; and a binder resin, in which the binder resin contains an olefin-based resin, and
a composite containing the conductive particles, the organic fibers, and the binder resin is bonded to a part of a network structure formed by the carbon fibers.

The organic fibers are preferably fibrillated fibers.

An average fiber length of the carbon fibers is preferably 5 to 10 mm.

An average particle diameter of the conductive particles is preferably 10 to 500 µm.

The conductive particles are preferably scale-shaped.

A density of the carbon fiber sheet is preferably 0.4 to 0.8 g/cm³.

The carbon fiber sheet preferably does not contain a fluorine-based resin, or the carbon fiber sheet preferably contains the fluorine-based resin, and a content of the fluorine-based resin is preferably 10 mass% or less in a case where a total amount of the carbon fiber sheet is 100 mass%.

A second aspect of the present invention is a fuel cell gas diffusion layer, in which a microporous layer is laminated on a surface of the carbon fiber sheet.

The microporous layer preferably contains scale-shaped conductive particles and an olefin-based resin.

A third aspect of the present invention is a membrane electrode composite including:
an electrolyte membrane formed of a solid polymer electrolyte;
a fuel electrode laminated on one surface of the electrolyte membrane; and
an air electrode laminated on another surface of the electrolyte membrane, in which
the fuel electrode includes a first catalyst layer in contact with the electrolyte membrane and a first gas diffusion layer laminated on the first catalyst layer,
the air electrode includes a second catalyst layer in contact with the electrolyte membrane and a second gas diffusion layer laminated on the second catalyst layer, and
at least one of the first gas diffusion layer or the second gas diffusion layer is the fuel cell gas diffusion layer.

### Advantageous Effects of Invention

According to the present invention, it is possible to provide the carbon fiber sheet suitable as the constituent member of the gas diffusion layer in a fuel cell and having excellent performance.

### Brief Description of Drawings

[Fig. 1] Fig. 1 illustrates a schematic view of a carbon fiber sheet according to the present disclosure.
[Fig. 2] Fig. 2 illustrates a schematic view of a membrane electrode composite according to the present disclosure.
[Fig. 3] Fig. 3 is an SEM photograph of a surface of the carbon fiber sheet according to the present example.

### Description of Embodiments

Hereinbelow, in a case where the upper limit value and the lower limit value are described separately, a numerical range obtained by combining any upper limit value and any lower limit value is substantially disclosed.

Hereinbelow, unless otherwise specified, various measurements are performed with the environmental temperature set to room temperature (23°C).

A carbon fiber sheet according to the present disclosure, a fuel cell gas diffusion layer using the carbon fiber sheet according to the present disclosure, and a membrane electrode composite including the fuel cell gas diffusion layer will be described below.

### <<<Carbon Fiber Sheet>>>

### <<Component>>

A carbon fiber sheet according to the present disclosure contains carbon fibers, conductive particles, organic fibers, and a binder resin.

The carbon fiber sheet according to the present disclosure, in which a composite containing the conductive particles, the organic fibers, and the binder resin is bonded to a part of a network structure formed by carbon fibers, is formed. In other words, the organic fibers, the conductive particles, and the binder resin are bonded to an interlacing point (or the vicinity of the interlacing point) that is formed by interlacing carbon fibers to form the carbon fiber sheet. As described above, since the carbon fiber sheet has a structure in which a specific composite containing a conductive material is bonded to the interlacing point, electric resistance can be reduced while strength and the like are improved.

### <Carbon Fibers>

The carbon fibers constitute the main structural framework of the carbon fiber sheet as a base material, and function as a conductive path and a scaffold for other components.

The average fiber length of the carbon fibers is preferably 1 mm or more, 3 mm or more, or 5 mm or more, and preferably 100 mm or less, 50 mm or less, or 10 mm or less. Since the average fiber length of the carbon fibers is within such a length, a network structure in which the fibers are sufficiently entangled with each other and serve as a scaffold for other components is appropriately formed, and a uniform sheet is formed, so that a carbon fiber sheet excellent in conductivity, strength, and the like is obtained.

The average fiber length of the carbon fibers is calculated as an average value of fiber diameters of 50 carbon fibers constituting the carbon fiber sheet, the fiber diameters being measured using an optical microscope.

The content of the carbon fibers is preferably 10 to 50 mass%, 15 to 45 mass%, or 20 to 40 mass% in a case where the total amount of the carbon fiber sheet is 100 mass%. By setting the content of the carbon fibers within such a range, the conductivity, strength, flexibility, and the like of the carbon fiber sheet can be enhanced.

### <Organic Fibers>

The organic fibers are preferably fibrillated fibers.

The organic fibers may be natural fibers or synthetic fibers.

Examples of the natural fibers include wood fibers such as MP, CP, GP, RGP, CGP, SP, AP, KP, and SCP, composed of softwood and hardwood, and fibers such as cotton, straw, bamboo, esparto, bagasse, linter, Manila hemp, flax, hemp, jute, and ganpi.

Examples of the synthetic fibers include olefin-based resin fibers such as polyethylene fibers and polypropylene fibers, and fibers composed of polyacetal; polyimide; PBO; fluorine-based resins such as PTFE; styrene and copolymers thereof; and acrylic acid esters and copolymers thereof.

These fibers are preferably fibrillated. Here, the fibrillation of the fibers means that the fibers are subjected to fibrillation processing (processing of fiber surface roughening).

A method for fibrillating fibers is not particularly limited, and can be carried out using a beating machine such as SDR, DDR, or beater.

The beating degree of the fibers in the organic fibers is preferably 300 CSF or less, 250 CSF or less, 200 CSF or less, or 150 CSF or less in terms of freeness (in accordance with JIS P 8121, which is a Canadian standard freeness).

The content of the organic fibers is preferably 1 to 20 mass%, 3 to 18 mass%, or 5 to 15 mass% in a case where the total amount of the carbon fiber sheet is 100 mass%. By setting the content of the organic fibers within such a range, the conductivity, strength, flexibility, and the like of the carbon fiber sheet can be enhanced.

In the carbon fiber sheet, the content of the organic fibers with respect to the content of the carbon fibers (organic fiber/carbon fiber) is preferably 0.1 to 0.7, 0.1 to 0.6, or 0.2 to 0.5.

### <Conductive Particles>

The average particle diameter of the conductive particles is preferably 1 to 500 µm, 10 to 500 µm, or 15 to 200 µm. By setting the average particle diameter of the conductive particles within such a range, it is possible to improve the electrical conductivity of the carbon fiber sheet, to have excellent air permeability, and to prevent detachment of the particles.

The average particle diameter of the conductive particles is calculated as an average value of particle diameters (maximum diameters) of 50 conductive particles contained in the carbon fiber sheet, the particle diameters being measured using an optical microscope.

The shape of the conductive particles may be any shape such as a spherical shape, a plate shape, a linear shape, a flake shape, and a scale shape, and the shape is preferably a scale shape from the viewpoint of enhancing conductivity.

The conductive particles are not particularly limited as long as particles have conductivity, and examples thereof include metal-based materials such as gold, silver, copper, nickel, tin, lead, zinc, bismuth, and alloys thereof, and carbon-based materials such as carbon black, graphite, carbon nanotubes, and fullerene.

The content of the conductive particles is preferably 10 to 50 mass%, 10 to 60 mass%, or 30 to 50 mass% in a case where the total amount of the carbon fiber sheet is 100 mass%. By setting the content of the conductive particles within such a range, the conductivity, strength, and the like of the carbon fiber sheet can be enhanced.

In the carbon fiber sheet, the content of the conductive particles with respect to the content of the carbon fibers (conductive particle/carbon fiber) is preferably 0.5 to 1.7, 0.8 to 1.6, or 1.0 to 1.5.

### <Binder Resin>

The binder resin preferably contains an olefin-based resin. The binder resin in the present disclosure is a component generally used as a binder, and is a component different from the organic fibers described above.

Examples of the olefin-based resin include polyethylene, polypropylene, and cycloolefin polymer (COP resin).

By using a resin as a binder component of the carbon fiber sheet, the water repellency, flexibility, strength, and the like of the carbon fiber sheet can be enhanced.

The content of the binder resin is preferably 5 to 30 mass% or 10 to 25 mass% in a case where the total amount of the carbon fiber sheet is 100 mass%. By setting the content of the binder resin within such a range, the conductivity, strength, and the like of the carbon fiber sheet can be enhanced.

In the carbon fiber sheet, the content of the binder resin with respect to the content of the carbon fibers (binder resin/carbon fiber) is preferably 0.3 to 1.2, 0.4 to 1.1, or 0.5 to 1.0.

In the carbon fiber sheet, the total content of the conductive particles, the organic fibers, and the binder resin with respect to the content of the carbon fibers ([conductive particle + organic fiber + binder resin]/carbon fiber) is preferably 1.5 to 3.0, 1.8 to 2.8, or 2.0 to 2.5.

### <Other Components>

The carbon fiber sheet may contain other components as long as the effects of the present invention are not impaired. Examples of other components include surfactants, dispersants, thickeners, antifoaming agents, paper strength enhancers, inorganic binders, organic binders other than olefin-based resins, and inorganic fibers other than carbon fibers. These components are preferably 10 mass% or less, 5 mass% or less, 3 mass% or less, or 1 mass% or less in a case where the total amount of the carbon fiber sheet is 100 mass%.

Here, the carbon fiber sheet preferably does not contain a fluorine-based resin, or the content of the fluorine-based resin is preferably 10 mass% or less in a case where the total amount of the carbon fiber sheet is 100 mass%. In addition, the content of the fluorine-based resin is preferably 5 mass% or less, 3 mass% or less, or 1 mass% or less in a case where the total amount of the carbon fiber sheet is 100 mass%. Since sufficient water repellency is easily obtained in the carbon fiber sheet even without containing a fluorine-based resin (alternatively, even with a small content of the fluorine-based resin), the carbon fiber sheet according to the present disclosure can easily achieve an improvement of performance, an improvement of productivity, and the like by optimized materials.

A conventionally known carbon fiber sheet is typically obtained by a production method including forming a carbon fiber sheet, impregnating the carbon fiber sheet with a phenol material and carbonizing the impregnated carbon fiber sheet, and then impregnating the carbon fiber sheet with a fluorine-based resin material and firing the resultant carbon fiber sheet.

The preferable form of the carbon fiber sheet according to the present disclosure is as follows.

The carbon fiber sheet according to the present disclosure contains carbon fibers, conductive particles, organic fibers, and a binder resin.

The binder resin preferably contains an olefin-based resin.

The content of the carbon fibers is preferably 10 to 50 mass% in a case where the total amount of the carbon fiber sheet is 100 mass%.

The content of the organic fibers is preferably 1 to 20 mass% in a case where the total amount of the carbon fiber sheet is 100 mass%.

The content of the conductive particles is preferably 10 to 60 mass% in a case where the total amount of the carbon fiber sheet is 100 mass%.

The content of the binder resin is preferably 5 to 30 mass% in a case where the total amount of the carbon fiber sheet is 100 mass%.

The content of the fluorine-based resin is preferably 10 mass% or less (including 0 mass%) in a case where the total amount of the carbon fiber sheet is 100 mass%.

In the carbon fiber sheet, the content of the organic fibers with respect to the content of the carbon fibers (organic fiber/carbon fiber) is preferably 0.1 to 0.7.

In the carbon fiber sheet, the content of the conductive particles with respect to the content of the carbon fibers (conductive particle/carbon fiber) is preferably 0.5 to 1.7.

In the carbon fiber sheet, the content of the binder resin with respect to the content of the carbon fibers (binder resin/carbon fiber) is preferably 0.3 to 1.2.

Such a carbon fiber sheet exhibits excellent performance in terms of conductivity, flexibility, strength, and the like.

### <<Structure/Physical Properties/Properties>>

The density of the carbon fiber sheet is preferably 0.1 to 1.5 g/cm³, 0.2 to 1.0 g/cm³, or 0.4 to 0.8 g/cm³. By setting the density of the carbon fiber sheet within such a range, it is possible to obtain a sheet excellent in conductivity and the like while ensuring the air permeability of the sheet.

The density of the carbon fiber sheet is calculated by the mass and thickness of the carbon fiber sheet.

The thickness of the carbon fiber sheet is not particularly limited, and is preferably 10 to 1000 µm or 100 to 400 µm.

### <<<Production Method>>>

Hereinafter, an example of a method for producing a carbon fiber sheet will be described.

The carbon fiber sheet is obtained by performing a raw material preparation step, a paper making step, and a drying step. Each step will be described below.

### <<Raw Material Preparation Step>>

Raw materials (carbon fibers, conductive particles, organic fibers, binder resin, and the like) are uniformly dispersed to adjust a raw material slurry.

### <<Paper Making Step>>

The raw material slurry is subjected to papermaking using a known paper machine to form a wet fiber sheet (wet sheet).

As the paper machine used in the paper making step, a paper machine applied to a general paper making technique can be applied, the paper machine is not particularly limited, and examples thereof include a Fourdrinier paper machine, a short-wire paper machine, a cylinder paper machine, an inclined paper machine, a twin-wire paper machine, and a combination paper machine obtained by combining the same or different kinds of paper machines among these.

### <<Drying Step>>

Moisture contained in the wet sheet is dried to form a carbon fiber sheet.

As the drying device used in the drying step, a device applied to drying a general carbon fiber sheet can be applied, and examples thereof include, but are not particularly limited to, a Yankee dryer, a rotary dryer, a hand dryer, an air dryer, a cylinder dryer, a suction drum dryer, and an infrared-type dryer.

The drying temperature is not particularly limited, and may be 100°C to 200°C or the like.

The drying time may be set until the water capacity in the wet sheet falls within a predetermined range (for example, less than 1 mass% of the total amount of the sheet).

### <<<Application>>>

The carbon fiber sheet according to the present disclosure can be used for various applications. The carbon fiber sheet according to the present disclosure can be preferably used as a material constituting an electrode material. The carbon fiber sheet according to the present disclosure can also be used in an electrolytic apparatus or the like, and is particularly preferably used for a fuel cell gas diffusion layer. That is, the carbon fiber sheet according to the present disclosure can be preferably used as a carbon fiber sheet for forming a gas diffusion layer in a fuel cell. For example, the carbon fiber sheet according to the present disclosure can be preferably used as a member of a membrane electrode composite constituting a fuel cell. In other words, the technology according to the present disclosure may be provided as a fuel cell or a fuel cell stack including a membrane electrode composite containing a carbon fiber sheet. The fuel cell or the fuel cell stack may be incorporated in an automobile as a power source.

Next, a specific example of a fuel cell gas diffusion layer containing the carbon fiber sheet according to the present disclosure will be described.

### <<<<Fuel Cell Gas Diffusion Layer A>>>>

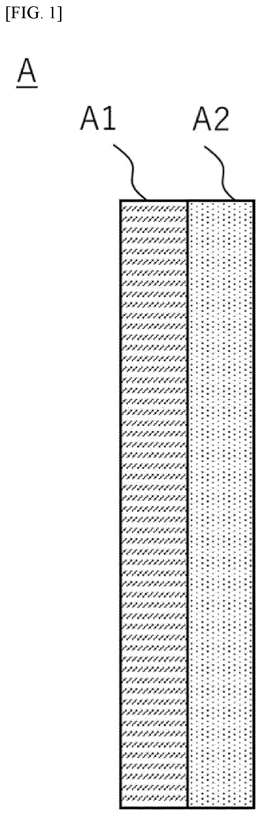

As illustrated in Fig. 1, a fuel cell gas diffusion layer A according to the present disclosure is a laminate including a carbon fiber sheet A1 and a microporous layer A2 laminated on a surface of the carbon fiber sheet.

The carbon fiber sheet A1 has a function of uniformly diffusing a gas introduced into a gas diffusion layer 1 and stabilizing a reaction (catalytic reaction) of the gas in a fuel cell or the like.

Since a specific configuration of the carbon fiber sheet A1 is as described above, the description thereof will not be repeated.

The microporous layer A2 is a layer containing a porous material, and functions to discharge water or water vapor which is a by-product generated by a reaction in a fuel cell.

As the microporous layer A2, a conventionally known microporous layer may be used, but a mixture of a binder resin and conductive particles is preferable.

As the olefin-based resin and the conductive particles, those described for the carbon fiber sheet A1 can be used.

The binder resin preferably contains an olefin-based resin. In addition, the conductive particles are preferably scale-shaped. In this way, by using the same materials for a preferable binder resin and/or preferable conductive particles constituting the carbon fiber sheet A1 as the materials for the binder resin and/or the conductive particles constituting the microporous layer A2, a fuel cell gas diffusion layer having excellent strength, conductivity, and the like can be obtained.

The content of the binder resin is preferably 50 to 90 mass%, 55 to 85 mass%, or 60 to 80 mass% in a case where the total amount of the microporous layer A2 is 100 mass%.

The content of the conductive particles is preferably 10 to 50 mass%, 15 to 45 mass%, or 20 to 40 mass% in a case where the total amount of the microporous layer A2 is 100 mass%.

The laminate including the carbon fiber sheet A1 and the microporous layer A2 can be produced, for example, by the following method.

The carbon fiber sheet A1 is produced according to the method described above.

Next, a slurry in which conductive particles and a binder resin are uniformly dispersed in an organic solvent is adjusted. The organic solvent is not particularly limited as long as the binder resin can be dissolved. In addition, the amount of the organic solvent may be appropriately prepared such that a viscosity at which a coating method described later can be easily carried out is obtained.

Next, a slurry containing the conductive particles and the binder resin is applied to the carbon fiber sheet A1. Examples of the coating method include a method using coating machines such as dam, lip, die, and bar types. The coating amount (coating thickness) of the slurry may be appropriately prepared such that a desired thickness after drying is obtained.

The carbon fiber sheet A1 coated with the slurry is heated, and the organic solvent contained in the slurry is dried to form the microporous layer A2.

As described above, the laminate including the carbon fiber sheet A1 and the microporous layer A2 laminated on the carbon fiber sheet A1 can be produced.

The step of drying the carbon fiber sheet A1 and the step of drying the microporous layer A2 may be performed simultaneously by applying the slurry for forming the microporous layer A2 in a moisture-containing state (alternatively, a state of the wet sheet that is a precursor of the carbon fiber sheet A1) before the drying step in the method for producing the carbon fiber sheet A1 is completed, and then performing the drying step.

The thickness of the microporous layer A2 is not particularly limited, and is preferably 10 to 100 µm.

The tensile strength of the fuel cell gas diffusion layer A is preferably 15 N or more. The tensile strength is a value obtained by performing measurement with a tensile tester by a method in accordance with JIS P 8113.

The surface resistivity of the fuel cell gas diffusion layer A (on the microporous layer side) is preferably 2.0 Ω/□ or less or 1.4 Ω/□ or less.

The surface resistivity of the fuel cell gas diffusion layer A (on the microporous layer side) is obtained by preparing a 30 mm□ specimen, measuring I-V characteristics, and calculating a resistance value.

Next, a membrane electrode composite including the fuel cell gas diffusion layer A (alternatively, the carbon fiber sheet A1) according to the present disclosure will be described.

### <<<<Membrane Electrode Composite 100>>>>

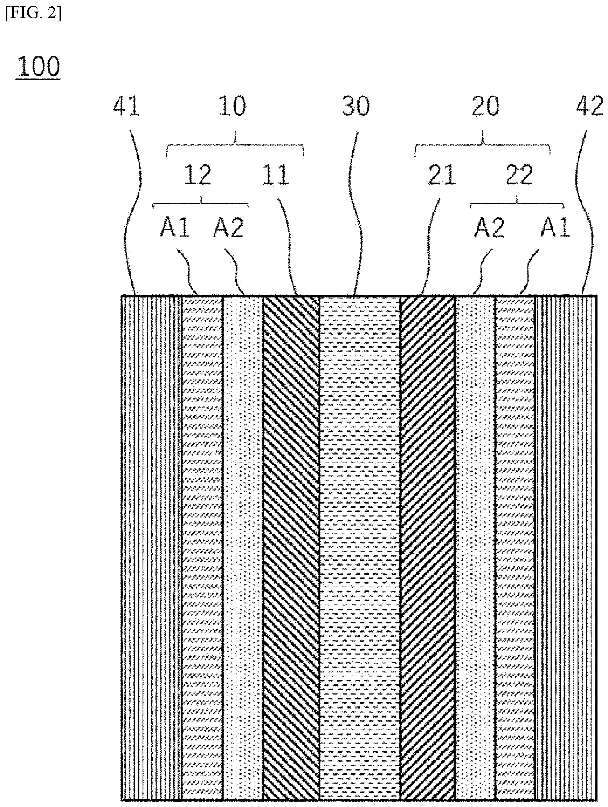

As illustrated in Fig. 2, a membrane electrode composite 100 according to the present disclosure at least includes an electrolyte membrane 30 formed of a solid polymer electrolyte, a fuel electrode 10 laminated on one main surface of the electrolyte membrane 30, and an air electrode 20 laminated on the other main surface (a main surface opposite to the main surface on which the fuel electrode 10 is laminated) of the electrolyte membrane 30.

The fuel electrode 10 includes a first catalyst layer 11 in contact with the electrolyte membrane 30, and a first gas diffusion layer 12 laminated on the first catalyst layer 11.

The air electrode 20 includes a second catalyst layer 21 in contact with the electrolyte membrane 30, and a second gas diffusion layer 22 laminated on the second catalyst layer 21.

At least one of the first gas diffusion layer 12 or the second gas diffusion layer 22 is preferably formed as the fuel cell gas diffusion layer A according to the present disclosure (a gas diffusion layer including the carbon fiber sheet A1 and the microporous layer A2 according to the present disclosure). Both the first gas diffusion layer 12 and the second gas diffusion layer 22 may include the fuel cell gas diffusion layer A according to the present disclosure. In a case where the gas diffusion layer includes a gas diffusion layer other than the fuel cell gas diffusion layer A according to the present disclosure, a conventionally known gas diffusion layer (a gas diffusion layer composed of a conductive porous material) can be used.

In this example, both the first gas diffusion layer 12 and the second gas diffusion layer 22 serve as the fuel cell gas diffusion layer A according to the present disclosure. In this case, as illustrated in Fig. 2, the first gas diffusion layer 12 is laminated such that the microporous layer A2 side is in contact with the electrolyte membrane 30. Similarly, the second gas diffusion layer 22 is laminated such that the microporous layer A2 side is in contact with the electrolyte membrane 30.

The first catalyst layer 11 and the second catalyst layer 21 can be conventionally known catalyst layers.

The catalyst layer is preferably a porous layer formed of a catalyst, and is preferably a porous layer formed of a granular catalytic material.

Examples of the catalytic material include metal materials such as platinum, palladium, ruthenium, iridium, rhodium, osmium, iron, lead, copper, chromium, cobalt, nickel, manganese, vanadium, molybdenum, gallium, and aluminum. The catalytic material may be an alloy or an oxide thereof.

The catalytic material is preferably a carbon-supported catalyst.

Examples of the carbon material include carbon black, graphite, carbon nanotube, and fullerene.

The shape and particle diameter of the catalytic material, the porosity of the catalyst layer (a filling rate of the catalytic material or a pore ratio of the catalyst layer), and the like can be appropriately and freely changed according to the use conditions and the like.

The electrolyte membrane 30 is not particularly limited, and examples thereof include solid polymer electrolyte membranes such as fluorine-based electrolyte membranes and hydrocarbon-based electrolyte membranes.

The electrolyte membrane 30 may be an oxygen ion conductor or a hydrogen ion conductor.

In addition, as illustrated in Fig. 2, the membrane electrode composite 100 preferably further includes a first separator 41 on a surface opposite to a surface of the fuel electrode 10 on which the electrolyte membrane 30 is laminated (in Fig. 2, the carbon fiber sheet A1 side of the fuel electrode 10). In addition, the membrane electrode composite 100 preferably further includes a second separator 42 on a surface opposite to a surface of the air electrode 20 on which the electrolyte membrane 30 is laminated (in Fig. 2, the carbon fiber sheet A1 side of the air electrode 20).

As the first separator 41 and the second separator 42, conventionally known separators can be used.

The first separator 41 is a flat plate-shaped member. Although not illustrated, a plurality of grooves are provided on the main surface of the first separator 41, which is a surface facing the fuel electrode 10. These grooves serve as a flow path capable of guiding gas (gas containing hydrogen) into the membrane electrode composite 100.

Similarly, the second separator 42 is a flat plate-shaped member. Although not illustrated, a plurality of grooves are provided on the main surface of the second separator 42, which is a surface facing the air electrode 20. These grooves serve as a flow path capable of guiding gas (gas containing oxygen) into the membrane electrode composite 100.

In addition, the first separator 41 and the second separator 42 function to shield the entire membrane electrode composite 100.

According to the fuel cell using the membrane electrode composite 100 illustrated in Fig. 2, a reaction occurs as follows.

Hydrogen is guided to the first gas diffusion layer 12 through the grooves provided in the first separator 41. Hydrogen introduced into the first gas diffusion layer 12 is made uniform in the plane direction, and reaches the first catalyst layer 11.

Similarly, oxygen is introduced into the second gas diffusion layer 22 through the groove provided in the second separator 42. Oxygen introduced into the second gas diffusion layer 22 is made uniform in the plane direction, and reaches the second catalyst layer 21.

In a case where the electrolyte membrane 30 is a hydrogen ion conductor, hydrogen ions and electrons are generated from hydrogen in the first catalyst layer 11, the generated hydrogen ions pass through the electrolyte membrane 30 and reach the second catalyst layer 21, and hydrogen ions, oxygen, and electrons react in the second catalyst layer 21 to generate water. This water passes through, for example, the microporous layer A2 in contact with the second catalyst layer 21 and is discharged to the outside.

In a case where the electrolyte membrane 30 is an oxygen ion conductor, oxygen ions are generated from oxygen and electrons in the second catalyst layer 21, the generated oxygen ions pass through the electrolyte membrane 30 and reach the first catalyst layer 11, and hydrogen and oxygen ions react in the first catalyst layer 11 to generate water and electrons. This water passes through, for example, the microporous layer A2 in contact with the first catalyst layer 11 and is discharged to the outside.

In a case where the membrane electrode composite 100 according to the present disclosure is incorporated into a fuel cell, the fuel cell may further include other members such as a current collector, a gas supply device, a cooling device, and an outer casing. In addition, a cell stack may be formed by laminating a plurality of membrane electrode composites 100.

### Examples

Hereinafter, the present invention will be described in more detail with reference to examples, but the present invention is not limited thereto at all.

### <<Example 1>>

### <Production of Carbon Fiber Sheet>

Carbon fibers, conductive particles, organic fibers, and a binder resin were mixed such that the content of each component in the resultant carbon fiber sheet was as illustrated in Table 1 to prepare a raw material slurry.

A papermaking sheet was obtained from the raw material slurry using an inclined paper machine.

The papermaking sheet was dried using a Yankee dryer to obtain a carbon fiber sheet according to Example 1. The density of the obtained carbon fiber sheet is illustrated in Table 1.

### <Production of Carbon Fiber Sheet/Microporous Layer Laminate>

Conductive particles and a binder resin were mixed such that the content of each component in the resultant microporous layer was the proportion illustrated in Table 1 to prepare a slurry for a microporous layer. Toluene was used as an organic solvent.

The slurry for a microporous layer was applied to the carbon fiber sheet using toluene, and the organic solvent in the slurry for a microporous layer was then dried to obtain a laminate in which the microporous layer was laminated on the carbon fiber sheet.

### <<Examples 2 to 20, Comparative Examples 1 to 4>>

Laminates according to Examples 2 to 20 and Comparative Examples 1 to 4 were obtained in the same manner as in Example 1 except that the raw materials used were changed to those illustrated in Tables 1 and 2.

### <<Evaluation>>

The laminate according to each of Examples and Comparative Examples was evaluated for conductivity, tensile strength, and flexibility. The evaluation results are illustrated in Tables 1 and 2.

### <Conductivity>

The surface resistivity was measured according to the above-described method, and the case of less than 1.4 Ω/□ was evaluated as "○", the case of 1.4 Ω/□ or more and less than 2.0 Ω/□ was evaluated as "△", and the case of 2.0 Ω/□ or more was evaluated as "×".

### <Tensile Strength>

The tensile strength was measured according to the above-described method, and the case where the tensile strength (N/15 mm) was 15 N or more was evaluated as "○", and the case where the tensile strength was less than 15 N was evaluated as " ×".

### <Flexibility>

The flexibility was evaluated according to the following method and evaluation criteria.

The flexibility is measured in accordance with JIS8115-2001. A specimen having a width of 15 mm and a length of 110 mm is prepared and set in an MIT tester. The test weight was set to 0.5 kgf, and the plunger was adjusted to 0. The specimen is mounted vertically on a clamp having R0.38mm, and measurement is started. The number of reciprocating bending cycles until fracture is counted.

The case where the number of bending cycles was 10 or more was evaluated as "○", the case where the number of bending cycles was 5 or more and less than 10 was evaluated as "△", and the case where the number of bending cycles was less than 5 was evaluated as "×".

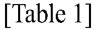

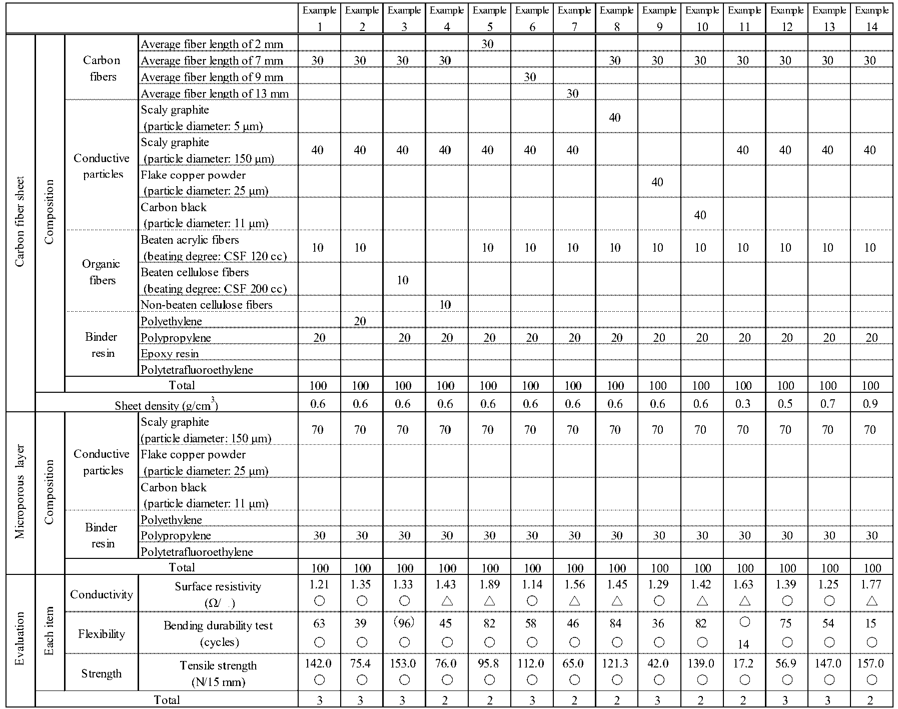

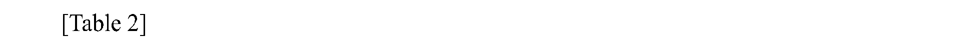

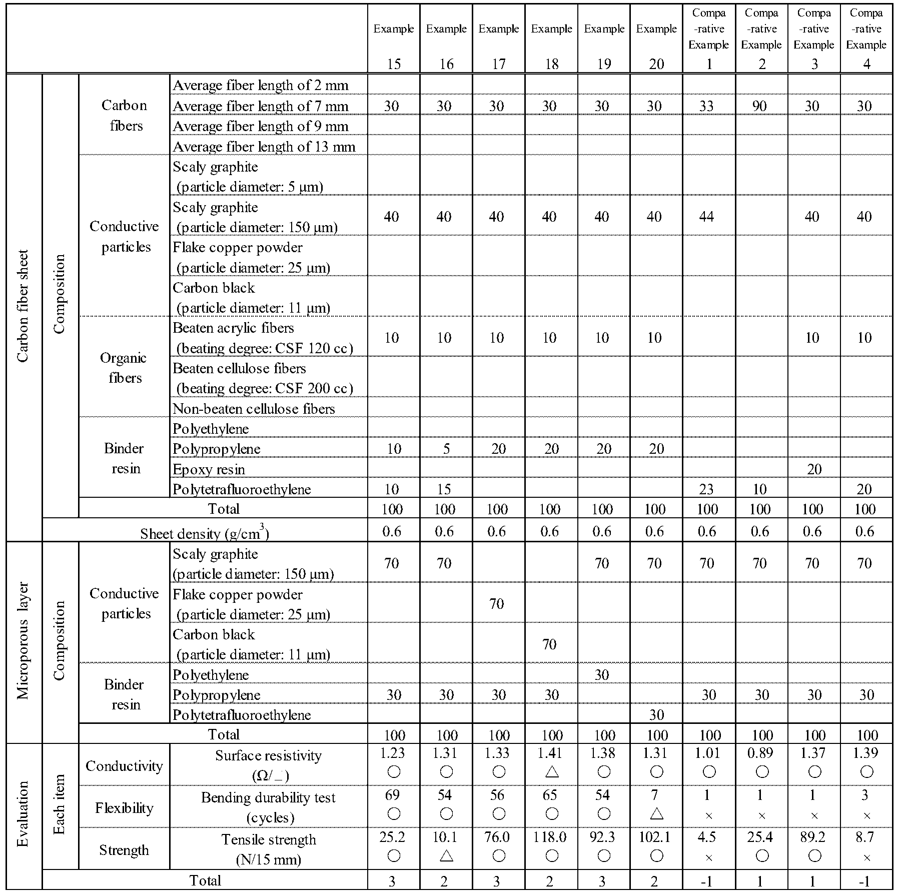

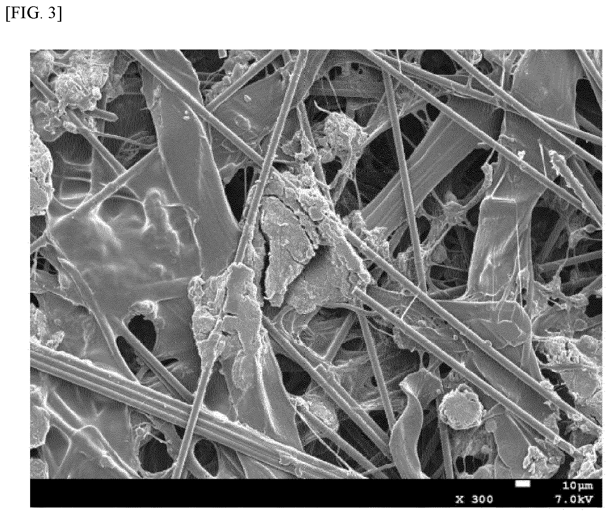

An SEM photograph of a surface of the carbon fiber sheet according to Example 1 is illustrated in Fig. 3. As illustrated in Fig. 3, it was confirmed that the carbon fiber sheet according to each example including Example 1, in which a composite containing the conductive particles, the organic fibers, and the binder resin was bonded to a part of a network structure formed by carbon fibers, was formed. The carbon fiber sheet according to each example was excellent in terms of conductivity, flexibility, strength, and the like. Since the carbon fiber sheet according to each example also has sufficient water repellency, it can be said that the carbon fiber sheet has preferable performance as a constituent member of the gas diffusion layer in the fuel cell.

## Claims

1. A carbon fiber sheet comprising:
carbon fibers;
conductive particles;
organic fibers; and
a binder resin, wherein
the binder resin contains an olefin-based resin, and
a composite containing the conductive particles, the organic fibers, and the binder resin is bonded to a part of a network structure formed by the carbon fibers.

2. The carbon fiber sheet according to claim 1, wherein the organic fibers are fibrillated fibers.

3. The carbon fiber sheet according to claim 1 or 2, wherein an average fiber length of the carbon fibers is 5 to 10 mm.

4. The carbon fiber sheet according to claim 1 or 2, wherein an average particle diameter of the conductive particles is 10 to 500 µm.

5. The carbon fiber sheet according to claim 1 or 2, wherein the conductive particles are scale-shaped.

6. The carbon fiber sheet according to claim 1 or 2, wherein a density of the carbon fiber sheet is 0.4 to 0.8 g/cm³.

7. The carbon fiber sheet according to claim 1 or 2, wherein the carbon fiber sheet does not contain a fluorine-based resin, or the carbon fiber sheet contains the fluorine-based resin, and a content of the fluorine-based resin is 10 mass% or less in a case where a total amount of the carbon fiber sheet is 100 mass%.

8. A fuel cell gas diffusion layer, wherein a microporous layer is laminated on a surface of the carbon fiber sheet according to claim 1 or 2.

9. The fuel cell gas diffusion layer according to claim 8, wherein the microporous layer contains scale-shaped conductive particles and an olefin-based resin.

10. A membrane electrode composite comprising:
an electrolyte membrane formed of a solid polymer electrolyte;
a fuel electrode laminated on one surface of the electrolyte membrane; and
an air electrode laminated on another surface of the electrolyte membrane, wherein
the fuel electrode includes a first catalyst layer in contact with the electrolyte membrane and a first gas diffusion layer laminated on the first catalyst layer,
the air electrode includes a second catalyst layer in contact with the electrolyte membrane and a second gas diffusion layer laminated on the second catalyst layer, and
at least one of the first gas diffusion layer or the second gas diffusion layer is the fuel cell gas diffusion layer according to claim 8.
